# EUROPÄISCHE PATENTSCHRIFT

(11) **EP 3 297 932 B1**
(45) Veröffentlichungstag und Bekanntmachung des Hinweises auf die Patenterteilung: **08.05.2019**
(21) Anmeldenummer: 15727874.8
(22) Anmeldetag: 19.05.2015
(51) Int. Cl.: B65D 77/20, B65B 51/22, B65B 7/28

(54) **DECKELANORDNUNG FÜR EINEN VERPACKUNGSBEHÄLTER, VERPACKUNGSBEHÄLTER MIT EINER SOLCHEN DECKELANORDNUNG UND VERFAHREN ZU IHRER HERSTELLUNG**
LID ASSEMBLY FOR A PACKAGING CONTAINER, PACKAGING CONTAINER WITH SUCH A LID ASSEMBLY, AND METHOD FOR PRODUCING SAME
ENSEMBLE COUVERCLE POUR UN RÉCIPIENT D'EMBALLAGE, RÉCIPIENT D'EMBALLAGE POURVU D'UN TEL ENSEMBLE COUVERCLE ET PROCÉDÉ POUR SA FABRICATION

(43) Veröffentlichungstag der Anmeldung: 28.03.2018
(73) Patentinhaber: Sonoco Development, Inc., Hartsville, South Carolina 29550 (US)
(72) Erfinder: HAUCK, Peter, 67590 Monsheim (DE); GERBER, Eugen, 68229 Mannheim (DE); ZIMMERMANN, Joachim, Kansas City, Missouri 64112 (US); KOCKSCH, Holger, 68766 Hockenheim (DE)
(74) Vertreter: Lichti - Patentanwälte Partnerschaft mbB
(86) Internationale Anmeldenummer: PCT/EP2015/001016
(87) Internationale Veröffentlichungsnummer: WO 2016/184478

(56) Entgegenhaltungen:
- WO-A1-2013/167958
- DE-U1- 8 218 388

## Beschreibung

Die Erfindung betrifft eine Deckelanordnung für einen Verpackungsbehälter, mit einem Deckelring aus einem plastifizierbaren, thermoplastischen Polymermaterial und einem auf den Deckelring aufsetzbaren, formhaltigen Deckelteil, wobei
- das Deckelteil an seiner dem Deckelring zugewandten Seite wenigstens eine Lage aus einem peelfähigen Kunststoffmaterial aufweist, wobei die peelfähige Lage wenigstens ein siegelbares, thermoplastisches Polymer enthält und/oder mit einer Decklage aus einem solchen Polymer beschichtet ist, und wobei der Deckelring an seiner dem Deckelteil zugewandten Stirnseite wenigstens einen Umfangsvorsprung aufweist, welcher mit der peelfähigen Lage und/oder der Decklage des Deckelteils versiegelt ist; oder
- der Deckelring an seiner dem Deckelteil zugewandten Seite wenigstens eine Lage aus einem peelfähigen Kunststoffmaterial aufweist, wobei die peelfähige Lage wenigstens ein siegelbares, thermoplastisches Polymer enthält und/oder mit einer Decklage aus einem solchen Polymer beschichtet ist, und wobei das Deckelteil an seiner dem Deckelring zugewandten Stirnseite wenigstens einen Umfangsvorsprung aufweist, welcher mit der peelfähigen Lage und/oder der Decklage des Deckelteils versiegelt ist.

Die Erfindung bezieht sich ferner auf einen Verpackungsbehälter mit einer Hülse, welche mit einer solchen Deckelanordnung versehen ist, sowie auf ein Verfahren zur Herstellung einer solchen Deckelanordnung.

Mit Deckelanordnungen, welche einen auf ein Deckelteil aufsetzbaren Deckelring umfassen, versehene Verpackungsbehälter finden insbesondere in Form von sogenannten Kombidosen verbreitet Verwendung. Dabei verschließt das Deckelteil das eine Ende der üblicherweise aus Papier- oder Kartonverbundmaterialien gefertigten Hülse, an welcher der Deckelring festgelegt ist, während das andere Ende der Hülse von einem Bodenteil verschlossen ist. Solche Verpackungsbehälter bzw. Dosen werden insbesondere zur Aufnahme von rieselfähigen oder fluiden Substanzen, beispielsweise Lebens- und Genussmitteln, verwendet. Um den Inhalt des Verpackungsbehälters vor äußeren Einflüssen, z.B. Feuchtigkeit, oder vor Substanzverlust, beispielsweise durch Austrocknen, zu schützen, weist das Material der Hülse in der Regel eine Innenkaschierung aus einem im Wesentlichen gas- und flüssigkeitsundurchlässigen Material, wie Aluminium, Kunststoff oder dergleichen, auf.

Zusätzlich zu einem derartigen Schutz des Verpackungsgutes können die Verpackungsbehälter in der Regel mittels einer Membran aus gasundurchlässigem Material, wie Metall, Kunststoff oder dergleichen versiegelt sein, um auf diese Weise einen weitergehenden Schutz und eine längere Haltbarkeitsdauer des Verpackungsgutes sowie einen Schutz des Verbrauchers vor ungewollter oder beabsichtigter Beschädigung oder Verunreinigung des Verpackungsguts zu gewährleisten. Sofern der Verpackungsbehälter mit einer Deckelanordnung der vorgenannten Art ausgestattet ist, wird die Membran dabei innenseitig der Hülse entlang einer zylinderförmigen Siegelfläche auf die siegelbare Innenkaschierung aufgesiegelt, oder die Membran wird auf die Stirnseite der Hülse aufgesiegelt, sofern diese einen Öffnungsrand, wie beispielsweise in Form eines Bördels, aufweist, welcher mit einem einfachen Stülpdeckel verschließbar ist. Eine derartige Membransiegelung wird beim ersten Öffnen der Kartonverbunddose dauerhaft mehr oder weniger vollständig entfernt, wodurch ein erfolgtes Öffnen der Kartonverbunddose deutlich erkennbar ist. Um für ein einfaches Ausreißen einer solchen Membran zu sorgen, ohne dass scharfkantige und folglich eine Verletzungsgefahr darstellende Reste der Membran am Innenumfang der Hülse zurückbleiben und ins Innere der Hülse vorstehen, finden häufig sogenannte peelfähige Membranen Verwendung, welche aus mehreren, laminatartig aufgebauten Lagen bestehen, von welchen zumindest eine Lage aus einem peelfähigen, delaminierenden Material gefertigt ist. Derartige Membrane sind beispielsweise aus der EP 2 386 410 A1 bekannt.

Die Deckelanordnung dient bei bekannten Verpackungsbehältern vornehmlich zum Wiederverschließen des Verpackungsbehälters, nachdem die Dichtmembran - soweit vorhanden - entfernt worden ist, wobei das Deckelteil dem an der Oberseite der Hülse festgelegten Deckelring zweckmäßigerweise möglichst dicht anliegen sollte, um das Verpackungsgut - so weit möglich - vor äußeren Einflüssen zu schützen. Darüber hinaus ist es bekannt, das Deckelteil seinerseits auf den Deckelring aufzusiegeln bzw. aufzuschweißen, so dass einerseits ein Originalitätsverschluss gebildet ist, welcher das erstmalige Öffnen des Verpackungsbehälters anzuzeigen vermag und welcher andererseits einem zu der Membran zusätzlichen oder alternativen Schutz des Verpackungsgutes vor äußeren Einflüssen dienen kann, sofern auch der Deckelring gas- und flüssigkeitsdicht mit der Hülse verbunden ist, indem er beispielsweise mit der Innenkaschierung der Hülse versiegelt bzw. verschweißt ist.

Letzteres ist allerdings im Falle eines mehr oder minder formhaltigen Deckelteils problematisch, wie es erforderlich ist, um es nach dem erstmaligen Öffnen an dem Deckelring, z.B. kraft- oder formschlüssig, wie klemmend, rastend oder dergleichen, festlegen zu können. Hierbei besteht ein Problem darin, dass beim Aufsiegeln bzw. Aufschweißen des Deckelteils auf den Deckelring eine mehr oder minder flächige Schmelzverbindung erzeugt wird, welche ein einfaches Abtrennen des Deckelteils von dem Deckelring beim erstmaligen Öffnen sehr schwierig macht, wobei es zudem zu Beschädigungen sowohl des Deckelteils als auch des Deckelrings kommen kann.

Die AT 366 639 B beschreibt einen Verpackungsbehälter aus einem thermoplastischen Kunststoff, welcher an einer Oberseite in einen ringförmigen Flansch nach Art eines Deckelrings übergeht. Zum möglichst festen, gasdichten und unlösbaren Aufschweißen bzw. Aufsiegeln eines Deckelteils auf diesen "Deckelring", beispielsweise mittels Ultraschall, weist die obere, dem Deckelteil zugewandte Siegelfläche des "Deckelrings" einen oder mehrere, von diesem nach oben vorstehende Schweißkämme auf, welche zu einer lokal starken Erhitzung des Polymermaterials während des Schweißvorgangs führen, um das Deckelteil gasdicht und unlösbar dauerhaft mit dem flanschförmigen "Deckelring" zu verbinden. Zum erstmaligen Öffnen, d.h. zum erstmaligen Ablösen des Deckelteils von dem "Deckelring", ist letzterer mit einer umfänglichen Sollbruchlinie nahe seines Hülsenabschnittes versehen, so dass der endständige, mit dem Deckelteil fest verschweißte Ringabschnitt bzw. praktisch der gesamte "Deckelring" gemeinsam mit dem Deckelteil von dem Hülsenabschnitt des Behälters gelöst werden kann. Nachteilig ist einerseits das relativ mühsame Aufbrechen des "Deckelrings" von der Hülse entlang der Sollbruchlinie, wenn das hiermit verschweißte Deckelteil erstmals abgenommen werden soll, andererseits steht als Dichtfläche nach dem erstmaligen Öffnen nur ein hülsenparalleler Ringabschnitt am Innenumfang der Hülse zur Verfügung, welcher einem in die Hülse eingreifenden Vorsprung des Deckelteils anliegt, so dass die Dichtwirkung des Deckelteils zu wünschen übrig lässt, nachdem es erstmalig von der Hülse getrennt worden ist.

In der DE 82 18 388 U1 geht es um einen Verpackungsbehälter in Form eines Kunststoffbechers mit einem an seinem öffnungsseitigen Ende angeordneten Randflansch, welcher aus einem schweiß- bzw. siegelfähigen, thermoplastischen Kunststoff gefertigt ist und wenigstens einen, in Richtung eines Deckels vorstehenden Steg aufweist. Der bzw. die Stege sollen für eine dichte Verbindung des Bechers mit einem mit Kunststoff beschichteten Metallfoliendeckel dienen, wenn letzterer mittels eines heißen Pressstempels mit den Stegen des Randflansches verschweißt wird. In Bezug auf die Nachteile gilt weitestgehend das oben zur AT 366 639 B gesagte.

Darüber hinaus hat die Anmelderin festgestellt, dass ein Aufsiegeln bzw. Aufschweißen des Deckelteils auf den Deckelring auch dann Probleme bereitet, wenn der Deckelring mit einer Lage aus peelfähigem Kunststoffmaterial versehen ist, welches für eine saubere Trennung des Deckelrings sorgen soll. Der Grund hierfür besteht vornehmlich darin, dass die zum Aufsiegeln bzw. Aufschweißen des formhaltigen Deckelteils auf den Deckelring aufgrund dessen im Vergleich mit herkömmlichen Membranfolien höherer Materialstärke eine so hohe Schmelzenergie erfordert, dass die peelfähige Lage zerstört wird und die ihr zugedachte Funktion eines guten Öffnungsverhaltens nicht mehr zu erfüllen vermag. Dies gilt insbesondere im Falle eines Ultraschallsiegelns bzw. -schweißens, bei welchem das Deckelteil mittels Ultraschall in Schwingungen versetzt wird, um seine Kontaktfläche mit dem Deckelring infolge Reibung zu erhitzen und miteinander zu versiegeln bzw. zu verschmelzen. Dabei hat sich gezeigt, dass zur Erzeugung einer einwandfreien, flüssigkeits- und gasdichten Schmelzverbindung je nach Deckelabmessungen eine so hohe Ultraschallenergie erforderlich ist, dass peelfähige Lagen des Deckelteils zerstört werden. Insoweit stehen die beiden Funktionen, einerseits ein einfaches Ablösen des Deckelrings von dem Deckelteil sicherzustellen und andererseits eine gasdichte Verbindung zwischen denselben zu gewährleisten, einander entgegen, weil eine hohe Dichtigkeit ein möglichst vollflächiges Verschmelzen des Deckelrings mit dem Deckelteil erfordert (hohe Ultraschallenergie und/oder hoher Andruck), während zur Schonung der peelfähigen Lage, die während des Ultraschallverschweißens bzw. -versiegelns nicht zerstört werden darf, ein möglichst geringes Anschmelzen erforderlich ist (geringe Ultraschallenergie und/oder geringer Andruck).

Die WO 2013/167958 A1 beschreibt einen Verpackungsbehälter mit einer Deckelanordnung gemäß dem Oberbegriff des Anspruchs 1, welche einen auf die Hülse des Behälters aufgebrachten Deckelring und ein auf letzteren aufsetzbares Deckelteil umfasst. Sowohl der Deckelring als auch das Deckelteil sind aus formhaltigen Kunststoffmaterialien gefertigt. Was die Verbindung des Deckelrings mit dem Deckelteil betrifft, so kann vorgesehen sein, dass letzteres mit einer Lage aus einem peelfähigen Kunststoff versehen ist, wobei die peelfähige Lage ein siegelbares thermoplastisches Polymer, wie Polyethylen, enthält. Der Deckelring besteht z.B. aus Polypropylen und umfasst einen horizontalen Abschnitt, auf welchen das Deckelteil aufgesiegelt bzw. aufgeschweißt ist. Die zum Verschweißen/Versiegeln mit dem Deckelteil vorgesehene Verbindungsfläche des Deckelrings kann dabei mit einem Umfangsvorsprung ausgebildet sein, welcher während des Verschweißens mittels Ultraschall als Energierichtungsgeber dienen soll.

Als problematisch erweist sich auch hier das Ultraschallversiegeln des Deckelrings mit dem Deckelteil, um einerseits eine gasdichte Verbindung zwischen denselben herzustellen, andererseits die peelfähige Lage dabei nicht so sehr zu zerstören, dass ein zuverlässiges Ablosen des Deckelteils von dem Deckelring nicht mehr sichergestellt werden kann. Der als Energierichtungsgeber wirkende Umfangsvorsprung sorgt zwar für einen nur linienförmigen Kontakt des Deckels mit dem Deckelring während des Ultraschallschweißens und folglich für eine linienförmige Versiegelung, doch findet radial innen- und außenseitig dieser Schweißlinie mangels Kontakt eine allenfalls geringe Verschmelzung stattfindet. Dies birgt weiterhin - wenngleich freilich in etwas abgeschwächter Form - den obigen Nachteil, dass nämlich eine zuverlässige Schmelzverbindung nicht reproduzierbar erreicht werden kann, da sich diese nur entlang einer sehr schmalen Umfangslinie parallel zum Verlauf des Umfangsvorsprungs erstreckt, solange verhindert wird, dass die peelfähige Lage des Deckels nicht zerstört wird. Derartige, (zu) "dünne" Schmelzlinien bilden überdies beim erstmaligen Entfernen des Deckels von dem Ring sogenanntes "Engelshaar", worunter dünne, haarähnliche Kunststofffäden verstanden werden, welche für die Schmelzverbindung sorgen und beim Aufreißen aufgrund ihrer äußerst geringen Dicke gänzlich abgelöst werden und in den Behälter hineinfallen können, was hinsichtlich einer Verunreinigung des Verpackungsgutes nicht erwünscht ist.

Der Erfindung liegt daher die Aufgabe zugrunde, eine Deckelanordnung der eingangs genannten Art sowie einen mit einer solchen Deckelanordnung versehenen Verpackungsbehälter auf einfache und kostengünstige Weise dahingehend weiterzubilden, dass das Deckelteil im Wesentlichen gas- und flüssigkeitsdicht auf den Deckelring aufsiegel- bzw. aufschweißbar ist, aber gleichwohl eine einfache erstmalige Trennung des Deckelteils von dem Deckelring sichergestellt ist. Sie ist ferner auf ein Verfahren zur Herstellung einer solchen Deckelanordnung gerichtet.

Erfindungsgemäß wird diese Aufgabe bei einer Deckelanordnung der eingangs genannten Art dadurch gelöst, dass
- der Deckelring an seiner dem Deckelteil zugewandten Stirnseite wenigstens zwei im Wesentlichen parallel angeordnete Umfangsvorsprünge aufweist, welche mit der peelfähigen Lage und/oder der Decklage des Deckelteils versiegelt sind; oder
- das Deckelteil an seiner dem Deckelring zugewandten Stirnseite wenigstens zwei im Wesentlichen parallel angeordnete Umfangsvorsprünge aufweist, welche mit der peelfähigen Lage und/oder der Decklage des Deckelrings versiegelt sind,
wobei der Abstand der Umfangsvorsprünge höchstens 3 mm beträgt.

Ein zur Lösung dieser Aufgabe geeigneter Verpackungsbehälter zeichnet sich dadurch aus, dass er eine derartige Deckelanordnung aufweist, deren Deckelring an einem Ende der Hülse, insbesondere im Wesentlichen gas- und flüssigkeitsdicht, festgelegt ist.

Schließlich sieht die Erfindung in verfahrenstechnischer Hinsicht zur Lösung dieser Aufgabe bei einem Verfahren zur Herstellung einer solchen Deckelanordnung vor, dass das Deckelteil auf den Deckelring aufgesetzt und das Deckelteil mit Ultraschall angeregt wird, wobei die peelfähige Lage und/oder die Decklage des Deckelteils oder des Deckelrings mit den wenigstens zwei Umfangsvorsprüngen des Deckelrings oder des Deckelteils unter Bildung einer Schmelzverbindung zwischen den Umfangsvorsprüngen ultraschallversiegelt wird.

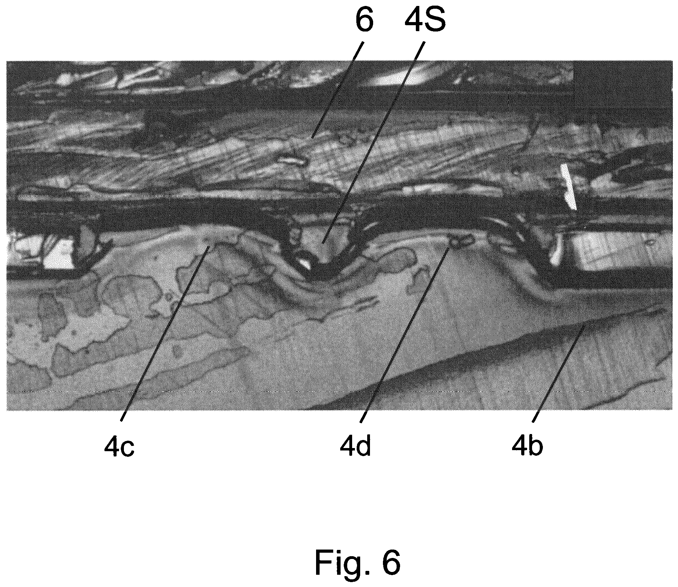

Die erfindungsgemäße Ausgestaltung macht es auf überraschend einfache Weise möglich, das mit wenigstens einer peelfähigen Lage versehene, formhaltige Deckelteil (bzw. den mit der wenigstens einen peelfähigen Lage versehenen Deckelring) der Deckelanordnung mittels Ultraschall auf den Deckelring (bzw. auf das Deckelteil) aufzusiegeln bzw. aufzuschweißen und dabei sowohl einen sehr einfach und bequem zu öffnenden Originalitätsverschluss zu bilden als auch für eine größtmögliche Gas- und Flüssigkeitsdichtigkeit der Deckelanordnung zu sorgen, weil die wenigstens zwei etwa parallel verlaufenden, unter einem sehr geringen Abstand von höchstens 3 mm angeordneten Umfangsvorsprünge sicherstellen, dass sich nicht nur an jedem der Vorsprünge jeweils eine lediglich durch "Engelshaar" gewährleistete, linienförmig schmale Schmelzverbindung einstellt, sondern es insbesondere infolge Wärmeleitung von beiden (oder auch mehreren) Umfangsvorsprüngen in dem ringförmigen Bereich zwischen den Umfangsvorsprüngen zu einer flächigen Schmelzverbindung kommt, die jedoch mangels Kontaktes aneinander während der Ultraschallanregung gleichwohl nicht zu einer thermomechanischen Beeinträchtigung der peelfähigen Lage führt. Die wenigstens zwei Umfangsvorsprünge verhindern dabei ein Abfließen von plastifiziertem Kunststoffmaterial während des Ultraschallschweißens, so dass dieses nach Art eines ringförmigen "Sees" in dem Zwischenraum zwischen den Umfangsvorsprüngen verbleibt, um nach dem Erstarren für die größtmögliche Gasdichtigkeit der Schmelzverbindung zu sorgen und zugleich ein sicheres Abreißen des Deckelteils von dem Deckelring zu ermöglichen, weil die peelfähige Lage dort mangels Schädigung ihre Funktion eines guten Ablöseverhaltens einwandfrei zu erfüllen vermag (siehe auch weiter unten unter Bezugnahme auf die Fig. 6). Sofern gewünscht, vermag die erfindungsgemäße Deckelanordnung folglich eine (zusätzliche) Dichtmembran im Innern der Hülse des Verpackungsbehälters entbehrlich zu machen, wenngleich eines solche grundsätzlich selbstverständlich gleichwohl vorgesehen sein kann.

Die mit dem Deckelteil (bzw. mit dem Deckelring) in Berührung stehenden Umfangsvorsprünge des Deckelrings (bzw. des Deckelteils) dienen folglich nicht nur als lokale Energierichtungsgeber während des Ultraschallversiegelns bzw. -verschweißens des Deckelteils mit dem Deckelring, indem sie, wenn das Deckelteil anlässlich des Ultraschallschweißvorgangs mittels einer Sonotrode in Ultraschallschwingungen versetzt wird, infolge Reibung mit dem insbesondere mechanisch in Richtung des Deckelrings vorbelasteten Deckelteil lokal plastifiziert und aufgeschmolzen werden, sondern vereinfachen auch die Verfahrensführung erheblich, da die Ultraschallschweißparameter, insbesondere Ultraschallenergie und Andruck, in einem gegenüber dem Stand der Technik breiten Intervall eingestellt werden können, nämlich von sehr geringen Werten (bis sich der Zwischenraum zwischen den Umfangsvorsprüngen gerade mit hiervon abgeschmolzenem Polymermaterial befüllt hat, um die hohe Dichtigkeit sicherzustellen) bis zu relativ hohen Werten (bis hin zu einer geringen thermomechanischen Beschädigung der peelfähigen Lage unmittelbar an den Spitzen der Vorsprünge, die ein einfaches Ablösen "gerade" noch gewährleisten). Die zur Ausbildung dieser Schweiß- bzw. Siegelbverbindung erforderliche Ultraschallenergie (bzw. die Amplitude des Ultraschalls) kann folglich trotz der gegenüber einer Membranfolie verhältnismäßig großen Dicke des formhaltigen Deckelteils hinreichend gering gewählt werden, um eine thermische und/oder mechanische Zerstörung der peelfähigen Lage des Deckelteils zu verhindern, so dass diese der ihr zugedachten Funktion eines guten Öffnungsverhaltens problemlos nachzukommen vermag. Dabei ist das erfindungsgemäße Verfahren insbesondere praktisch selbstregulierend, weil selbst dann, wenn es im unmittelbaren Kontaktbereich der Umfangsvorsprünge des Deckelrings (bzw. des Deckelteils) mit dem Deckelteil (bzw. mit dem Deckelring) zu einer lokalen thermomechanischen Beeinträchtigung der peelfähigen Lage kommt - was hinsichtlich einer hohen und zuverlässigen Gasdichtigkeit sogar erwünscht sein kann - in den zwischen den Umfangsvorsprüngen gelegenen Bereichen eine Schmelzverbindung nur im Wesentlichen infolge Wärmeleitung erzeugt wird, so dass jedenfalls dort eine Zerstörung der peelfähigen Lage ausgeschlossen wird. Folglich wird nicht nur eine besonders sichere, zuverlässige und reproduzierbare Schmelzverbindung größtmöglicher Dichtigkeit zwischen dem Deckelring und dem Deckelteil gebildet, sondern ergibt sich insbesondere in dem, z.B. etwa ringförmigen, Bereich zwischen den Umfangsvorsprüngen, in welchem es infolge Wärmeleitung ebenfalls zu einer Schmelzverbindung während des Ultraschallsiegelns bzw. -schweißens kommt, eine definierte Fläche, innerhalb welcher die peelfähige Lage des Deckelteils (bzw. des Deckelrings) beim erstmaligen Abtrennen voneinander aufzureißen vermag. Der Deckelring kann dabei vor dem Schweißvorgang auf die Hülse des Verpackungsbehälters aufgebracht werden, so dass das Deckelteil frei zugänglich bleibt, um es in Ultraschallschwingungen zu versetzen.

Das Material der peelfähigen Lage kann grundsätzlich von beliebigem bekannten Aufbau sein, wobei seine Delaminierfähigkeit üblicherweise dadurch erreicht wird, dass es aus wenigstens zwei schlecht miteinander kompatiblen und/oder einen unterschiedlichen Schmelzpunkt aufweisenden Polymeren gebildet ist, an dessen Grenzflächen folglich nur relativ geringe Bindungskräfte wirken, so dass es sauber getrennt werden kann. Lediglich beispielhaft seien in diesem Zusammenhang peelfähige Lagen aus einerseits Polyolefinen, wie Polyethylen, z.B. LDPE (Low-Density-Polyethylen), Polypropylen oder deren Copolymeren und Polymer-Blends und andererseits Polyolefinen, wie Polypropylen, Polyethylen, Polybuten, z.B. isotaktischem Polybutylen-1 (iPB-1), oder deren Copolymeren und Polymer-Blends erwähnt. Das mit einer solchen peelfähigen Lage versehene Deckelteil (bzw. der mit einer solchen peelfähigen Lage versehene Deckelring) kann dabei insbesondere selbst laminatförmig aufgebaut sein und neben der peelfähigen Lage weitere Lagen, wie formhaltige Stützlagen, z.B. ebenfalls aus Polyolefinen, Terephthalaten, z.B. Polyethylenterephthalat, Polyamiden und dergleichen, Haftvermittlungslagen, Barrierelagen (siehe hierzu weiter unten) etc. umfassen. Ferner kann die peelfähige die unmittelbare Decklage auf der dem Deckelring zugewandten Seite des Deckelteils (bzw. auf der dem Deckelteil zugewandten Seite des Deckelrings) bilden, wobei zumindest eines der Polymere der peelfähigen Lage mit dem Deckelring (bzw. mit dem Deckelteil) ultraschallversiegelt bzw. -verschweißt wird (d.h. die peelfähige Lage dient selbst zur Ausbildung der Schmelzverbindung), oder die peelfähige Lage kann außenseitig mit einem siegel- bzw. schweißbaren, thermoplastischen Decklage beschichtet sein, welche zumindest vornehmlich zur Ausbildung der Siegel- bzw. Schweißverbindung sorgt und beim erstmaligen Abtrennen des Deckelteils von dem Deckelring an dem Deckelring (bzw. an dem Deckelteil) verbleibt, während die darunter angeordnete peelfähige Lage reißt.

Es sei an dieser Stelle darauf hingewiesen, dass mit dem Begriff "Siegeln" im Rahmen der vorliegenden Offenbarung das Erstellen einer Schmelzverbindung angesprochen ist, wobei der Begriff "Schweißen" hierzu synonym verwendet wird.

Beim Ultraschallschweißen bzw. -versiegeln des Deckelteils mit dem Deckelring kann es ferner von Vorteil sein, wenn das Deckelteil mittels wenigstens einer Sonotrode mit Ultraschall angeregt wird, welche sich zumindest im Wesentlichen um den gesamten Umfang der wenigstens zwei Umfangsvorsprungs des Deckelrings erstreckt, so dass eine vollumfängliche Schmelzverbindung des Deckelrings mit dem Deckelteil zumindest in dem Bereich zwischen den Umfangsvorsprüngen sichergestellt wird. Die Sonotrode kann dabei beispielsweise platten- oder ringförmig sein.

Die wenigstens zwei Umfangsvorsprünge des Deckelrings oder des Deckelteils können beispielsweise im Wesentlichen konzentrisch angeordnet sein, wobei ihr Abstand - wie bereits erwähnt - höchstens 3 mm beträgt. In einem solchen Fall erstrecken sich folglich zwei (oder auch mehrere) Umfangsvorsprünge konzentrisch um den Umfang des Deckelrings oder des Deckelteils, wenngleich es selbstverständlich auch möglich ist, die Umfangsvorsprünge andersartig anzuordnen, wie beispielsweise in einem etwa sinus- oder zickzackförmigen Verlauf um den Umfang des Deckelrings oder des Deckelteils herum, solange stets jeweils zwei parallele Umfangsvorsprünge einen Abstand von höchstens 3 mm besitzen. Desgleichen ist beispielsweise eine raster-, karo-, wabenförmige etc. Anordnung jeweils paarweiser Umfangsvorsprünge um den Umfang des Deckelrings oder des Deckelteils denkbar, wobei der Abstand zwischen den paarweise angeordneten Umfangsvorsprüngen wiederum höchstens 3 mm beträgt.

Während es zur Sicherstellung einer einwandfreien Gasdichtigkeit der Schweiß- bzw. Siegelverbindung zwischen dem Deckelring und dem Deckelteil oft ausreicht, an deren Stirnseite genau zwei Umfangsvorsprünge vorzusehen, können selbstverständlich auch mehrere solcher Umfangsvorsprünge vorgesehen sein. Lediglich beispielhaft sei hierbei auf die Möglichkeit von drei Umfangsvorsprüngen unter einem Abstand von höchstens 3 mm oder von vier Umfangsvorsprüngen hingewiesen, von welchen jeweils zwei oder auch alle vier einen Abstand von höchstens 3 mm besitzen.

Der radiale Abstand der Umfangsvorsprünge beträgt bevorzugt zwischen etwa 0,3 mm und etwa 3 mm, insbesondere zwischen etwa 0,5 mm und etwa 2 mm, vorzugsweise zwischen etwa 0,7 mm und etwa 1 mm.

Darüber hinaus hat es sich als vorteilhaft erwiesen, wenn die Umfangsvorsprünge eine Höhe zwischen etwa 0,05 mm und etwa 0,4 mm, insbesondere zwischen etwa 0,1 mm und etwa 0,35 mm, vorzugsweise zwischen etwa 0,15 mm und etwa 0,3 mm, aufweisen, wobei sie zweckmäßigerweise zumindest eine Höhe von etwa 0,05 mm aufweisen sollten, um zu verhindern, dass sie während des Ultraschallschweißvorgangs mehr oder minder gänzlich abgeschmolzen werden, wobei es zu einer flächigen Übertragung der Ultraschallenergie und zu einer dadurch bedingten, flächigen thermomechanischen Beanspruchung der gesamten Stirnfläche des Deckelrings und des hiermit in Kontakt tretenden Deckelteils käme, welche zumindest nach einer gewissen Beanspruchungsdauer wiederum die Gefahr einer Zerstörung der peelfähigen Lage mit sich brächte.

Ferner hat es sich als vorteilhaft erwiesen, wenn sich der Querschnitt der Umfangsvorsprünge zu seinem freien Ende hin verjüngt, wobei er insbesondere spitz nach oben (bzw. zu seinem freien Ende hin) zuläuft. Derartige, spitz zulaufende Umfangsvorsprünge beanspruchen unmittelbar am Anfang des Ultraschallschweißvorgangs die peelfähige Lage lokal zwar relativ stark auf Druck, doch erweist sich eine spitze Ausgestaltung der Umfangsvorsprünge gleichwohl als günstig, weil das Abschmelzen der Spitze der Umfangsvorsprünge infolge sehr schneller lokaler Erwärmung der Umfangsvorsprünge zu einem spontanen Abschmelzen derselben führt, um den Zwischenraum zwischen denselben mit dem abgeschmolzenen Plastifikat zu befüllen und hierdurch die gasdichte, aber dennoch leicht zu öffnende Schmelzverbindung zu bilden.

Die Umfangsvorsprünge können dabei insbesondere einen im Wesentlichen dreieckigen Querschnitt aufweisen, welcher aus den vorgenannten Gründen vorzugsweise spitz nach oben zuläuft, aber grundsätzlich auch eine stirnseitige Abrundung besitzen kann.

Wie bereits erwähnt, besitzt das Deckelteil jedenfalls eine hinreichende Dicke, um für seine gewünschte Formhaltigkeit zu sorgen, welche es ihm möglich macht, nach erstmaligem Trennen von dem Deckelring wieder - sei es klemmend, rastend oder andersartig - auf den Deckelring aufgesetzt und hieran befestigt zu werden. Dabei weist das Deckelteil in vorteilhafter Ausgestaltung eine Dicke von insgesamt wenigstens etwa 0,2 mm, insbesondere von insgesamt wenigstens etwa 0,3 mm, vorzugsweise von insgesamt wenigstens etwa 0,4 mm, auf, wobei es zweckmäßigerweise eine Dicke von bis zu etwa 10 mm, insbesondere von bis zu etwa 8 mm, vorzugsweise von bis zu etwa 5 mm und höchst vorzugsweise kleiner als 5 mm, aufweisen kann.

Wie bereits angedeutet, kann darüber hinaus kann in weiterhin vorteilhafter Ausgestaltung vorgesehen sein, dass zumindest das Deckelteil wenigstens eine weitere Lage in Form einer im Wesentlichen gas- und flüssigkeitsdichten Barrierelage aufweist, um für einen hermetischen Einschluss des Verpackungsgutes zu sorgen und dabei eine Dichtmembran im Innern des Verpackungsbehälters entbehrlich zu machen. Derartige Barrierelagen sind als solche bekannt und können beispielsweise aus Metall oder Metalloxiden, z.B. aus Silicium(di)oxid, Aluminium, Aluminiumoxid etc., aus Polymeren, z.B. aus Ethylenvinylalkohol (EVOH), Polyvinylalkohol (PVOH), Polyvinylidenchlorid (PVDC), Polyamid (PA) einschließlich deren Copolymeren und Polymer-Blend etc. gebildet sein. Derartige Barrierelagen lassen sich beispielsweise als außenseitige Deckschicht oder - gegebenenfalls unter Zwischenanordnung geeigneter Haftvermittlungslagen - als innere Schicht anlässlich des Herstellungsprozesses eines geeigneten, für das Deckelteil eingesetzten Laminates auflaminieren oder in Form eines Lackes aufbringen.

Wie ebenfalls bereits angedeutet, sieht eine vorteilhafte Ausgestaltung der erfindungsgemäßen Deckelanordnung vor, dass das Deckelteil wenigstens einen in Richtung des Deckelrings vorstehenden Umfangsvorsprung aufweist, dessen Querschnitt derart an den Querschnitt einer hierzu komplementären Kontaktfläche des Deckelrings angepasst ist, dass das Deckelteil nach erstmaligem Abtrennen von dem Deckelring an dem Deckelring festlegbar ist, wobei es insbesondere dessen Kontaktfläche im Wesentlichen dichtend anliegt. Das Deckelteil, welches beispielsweise als Tiefziehteil ausgebildet sein kann, kann dabei vorzugsweise einen Umfangsvorsprung aufweisen, dessen Außenquerschnitt im Wesentlichen dem Innenquerschnitt des Deckelrings entspricht, so dass der Umfangsvorsprung des Deckelteils beim (Wieder)verschließen dem Innenquerschnitt des Deckelrings entlang einer ringförmigen Kontaktfläche anliegt. Der Außenquerschnitt des Umfangsvorsprungs des Deckelteils und/oder der Innenquerschnitt des Deckelteils kann dabei, sofern gewünscht, mit einem geeigneten Dichtungsmaterial beschichtet sein.

Die Hülse eines erfindungsgemäßen Verpackungsbehälters, wie einer Dose, welche(r) mit einer Deckelanordnung der oben beschriebenen Art ausgestattet ist, kann zweckmäßigerweise eine im Wesentlichen gas- und flüssigkeitsdichte Innenkaschierung aufweisen, welche aus bekannten, hierfür geeigneten Materialien, wie Metallen (z.B. Aluminium) und/oder Polymeren gefertigt sein kann.

In besonders vorteilhafter Ausgestaltung kann in diesem Fall vorgesehen sein, dass die Innenkaschierung der Hülse wenigstens eine Lage aus einem siegelfähigen Kunststoffmaterial aufweist, welches mit dem Deckelring der Deckelanordnung versiegelt ist, so dass auch zwischen der Hülse des Verpackungsbehälters und dem Deckelring der erfindungsgemäßen Deckelanordnung eine dauerhafte, einwandfrei gas- und flüssigkeitsdichte Siegel- bzw. Schweißverbindung sichergestellt ist. Die Siegel- bzw. Schweißverbindung kann auf beliebige bekannte Weise erstellt werden, wie beispielsweise ebenfalls mittels Ultraschallsiegeln bzw. -schweißen, mittels Hochfrequenzsiegeln bzw. -schweißen oder dergleichen.

Das erfindungsgemäße Verfahren gibt dabei insbesondere die Möglichkeit, dass der Deckelring zunächst auf die Hülse eines Verpackungsbehälters aufgesetzt wird und sodann das Deckelteil mit dem Deckelring ultraschallversiegelt bzw. -verschweißt wird.

Weist die Hülse wenigstens eine Lage aus einem siegelfähigen Kunststoffmaterial auf, so kann der Deckelring insbesondere, nachdem er auch die Hülse aufgesetzt worden ist, auf die oben beschriebene Weise mit der Innenkaschierung der Hülse versiegelt bzw. verschweißt werden, was insbesondere entlang eines inneren Umfangsabschnittes der Hülse geschehen kann, in welche der Deckelring eingreift.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht eines Verpackungsbehälters in Form einer Dose mit einer Ausführungsform einer erfindungsgemäßen Deckelanordnung, deren Deckelring an einem Ende der Hülse festgelegt ist, mit abgenommenem Deckelteil;
- Fig. 2: eine schematische Schnittansicht des mit der Deckelanordnung gemäß Fig. 1 versehenen Verpackungsbehälters;
- Fig. 3: eine schematische Detailansicht des Ausschnittes B gemäß Fig. 2 ;
- Fig. 4: eine schematische perspektivische Ansicht des Deckelrings der Deckelanordnung gemäß Fig. 1 bis 3 im Rohzustand, d.h. vor dem Versiegeln bzw. Verschweißen mit dem Deckelteil;
- Fig. 5: eine schematische Detailansicht des Deckelrings gemäß Fig. 4 in geschnittener Darstellung; und
- Fig. 6: eine mikroskopische Aufnahme einer erfindungsgemäßen Ultraschallschweiß- bzw. -siegelverbindung zwischen dem Deckelteil und dem Deckelring eines Verpackungsbehälters gemäß Fig. 1 im Bereich zwischen den beiden unter einem Abstand von etwas weniger als 1 mm angeordneten Umfangsvorsprüngen des Deckelrings.

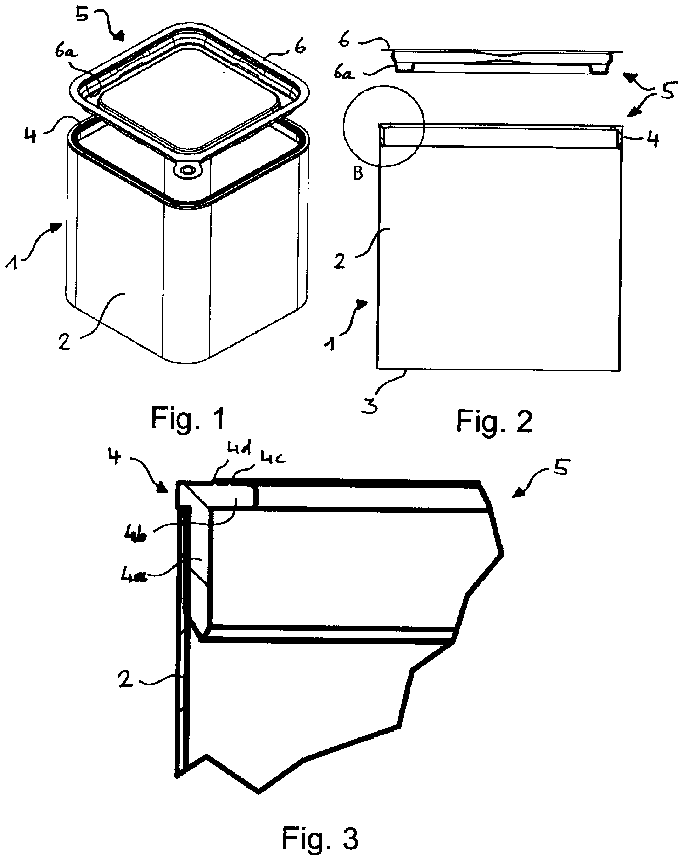

Der in den Fig. 1 und 2 schematisch wiedergegebene und insgesamt mit dem Bezugszeichen 1 versehene Verpackungsbehälter ist beim vorliegenden Ausführungsbeispiel von einer sogenannten Kombidose gebildet und weist eine Hülse 2 auf, welche beispielweise aus einem Papier- oder Kartonverbundmaterial gefertigt und mit einer im Wesentlichen gas- und flüssigkeitsdichten Innenkaschierung mit einer innenseitigen, siegel- bzw. schweißfähigen Decklage, z.B. aus polymerbeschichtetem Aluminium, versehen sein kann. An ihrer Unterseite ist die Hülse 2, welche selbstverständlich nicht notwendigerweise den gezeigten, etwa quadratischen Querschnitt besitzen muss, sondern auch eine beliebige andersartige Querschnittsform, z.B. rund, oval, mehreckig oder dergleichen, aufweisen kann, in herkömmlicher Weise mittels eines Bodenteils 3 verschlossen (Fig. 2), welches seinerseits aus entsprechenden Materialien wie die Hülse 2, aber auch aus Metall, Kunststoff oder entsprechenden Verbundmaterialien mit hoher Gas- und Flüssigkeitsdichtigkeit gefertigt sein kann.

An dem in Fig. 1 und 2 oberen, dem Bodenteil 3 abgewandten Ende der Hülse ist ein Deckelring 4 einer insgesamt mit dem Bezugszeichen 5 versehenen Deckelanordnung festgelegt, welcher aus einem thermoplastischen Polymermaterial, wie beispielsweise einem solchen auf der Basis von Polyethylen, gefertigt ist. Wie insbesondere aus der Fig. 3 ersichtlich, weist der Deckelring 4 einen etwa L-förmigen Querschnitt auf, dessen erster Schenkel 4a hülsenparallel um den oberen Innenumfangsabschnitt der Hülse 2 angeordnet ist und dessen zweiter Schenkel 4b sich im Wesentlichen senkrecht hierzu um das obere Ende der Hülse 2 erstreckt und dabei die obere Stirnseite der Hülse 2 übergreift bzw. abdeckt. Der Außenumfang des ersten Schenkels 4a des Deckelrings 2 ist mit der Innenkaschierung der Hülse 2 versiegelt bzw. verschweißt, beispielsweise mittels Ultraschall- oder Hochfrequenzsiegeln oder -schweißen.

Wie wiederum den Fig. 1 und 2 zu entnehmen ist, dient der erste Schenkel 4a des Deckelrings 4 ferner zur klemmenden Aufnahme eines formhaltigen, beispielsweise in Form eines Tiefziehteils ausgebildeten Deckelteils 6 der Deckelanordnung 5 an seinem Innenumfang, indem sein Innenquerschnitt etwa dem Außenquerschnitt eines in Richtung des Deckelrings 4 vorstehenden Umfangsvorsprungs 6a entspricht, so dass das Deckelteil 6 lösbar an dem Deckelring 4 festgelegt werden kann, wobei der Außenquerschnitt seines Umfangsvorsprungs 6a dem Innenquerschnitt des ersten Schenkels 4a des Deckelrings 4 dichtend anliegt.

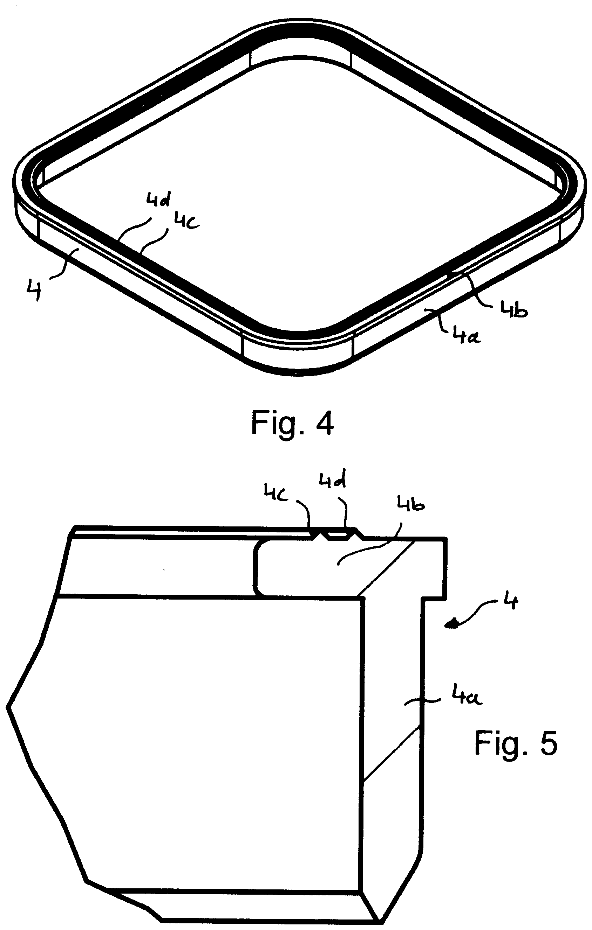

Wie den Detailansichten des Deckelrings 4 gemäß Fig. 4 und insbesondere gemäß Fig. 5 zu entnehmen ist, welche den Deckelring 4 gemäß Fig. 1 bis 3 im Rohzustand zeigen, weist der Deckelring 4 an seiner dem Deckelteil 6 (in Fig. 4 und 5 nicht nochmals gezeigt) zugewandten Stirnseite, d.h. auf der in Fig. 4 und 5 oberen Seite seines zweiten Schenkels 4b, zwei parallele und im vorliegenden Fall konzentrische Umfangsvorsprünge 4c, 4d auf, welche von seiner Stirnseite nach oben vorstehen. Dabei beträgt der radiale Abstand der beiden Umfangsvorsprünge 4c, 4d - im Rohzustand - z.B. etwa 0,8 mm, während ihre Höhe - ebenfalls im Rohzustand - etwa 0,2 mm beträgt. Die Gesamtdicke der Schenkel 4a, 4b des Deckelrings 4 kann im vorliegenden Fall beispielsweise etwa 1,4 mm betragen. Die Umfangsvorsprünge 4c, 4d verjüngen Z sich im vorliegenden Fall - wiederum in dem in Fig. 4 und 5 gezeigten Rohzustand - nach oben und laufen z.B. im Wesentlichen spitz nach oben zu, so dass sie einen etwa dreieckigen Querschnitt besitzen.

Das Deckelteil 6 weist einen - nicht zeichnerisch wiedergegebenen - laminatartigen Aufbau mit mehreren Lagen auf, wobei es beispielsweise - von seiner dem Deckelring (4) zugewandten Seite in Richtung seiner diesem entgegengesetzten Seite betrachtet - eine peelfähige Lage, z.B. aus einem LDPE-/iPB-l-Verbundmaterial, eine Haftvermittlungslage, eine Barrierelage, z.B. auf der Basis von EVOH, eine weitere Haftvermittlungslage und eine Trägerschicht, z.B. aus Polyethylenterephthalat (PET) umfasst. Überdies kann beispielsweise optional auf die dem Deckelring (4) zugewandte Seite, also auf die peelfähige Lage, eine weiteren siegelbare Lage, z.B. auf der Basis von Polyethylen, aufgebracht sein. Zum Zwecke einer hinreichenden Formhaltigkeit und Stabilität weist das derart aufgebaute Deckelteil 6 z.B. eine Gesamtdicke von etwa 0,5 mm auf.

Um das Deckelteil 6 auf den in Fig. 4 und 5 im Rohzustand dargestellten Deckelring 4 unter Bildung eines gas- und flüssigkeitsdichten Originalitätsverschlusses aufzusiegeln bzw. aufzuschweißen, wird das Deckelteil 6 auf den insbesondere bereits mit der Hülse 2 des Verpackungsbehälters 1 vorverbundenen Deckelring 4 aufgesetzt und sodann mittels Ultraschall, beispielsweise mit einer Frequenz von etwa 10 kHz bis etwa 50 kHz, wie etwa 20 kHz, und über eine Dauer von etwa 0,5 s bis etwa 5 s, wie etwa 1 s bis 2 s, angeregt und in Schwingungen versetzt, um die peelfähige Lage des Deckelteils 6 - und/oder gegebenenfalls die außenseitig derselben angeordnete, siegelfähige Decklage - auf die obere Stirnseite des zweiten Schenkels 4b des Deckelrings 4 aufzusiegeln bzw. aufzuschweißen. Dies kann insbesondere mittels einer oder mehreren Sonotroden (nicht gezeigt) geschehen, welche von oben gegen das Deckelteil 6 angedrückt werden und welche sich zweckmäßigerweise im Wesentlichen um den gesamten Umfang der Umfangsvorsprünge 4c, 4d des Deckelrings 4 (also deckungsgleich mit diesen) herum erstrecken, um für eine einwandfreie und gleichmäßige Schallübertragung zu sorgen.

Wie in Fig. 3 erkennbar, welche den Deckelring 4 in einem Zustand zeigt, in welchem er bereits mit dem Deckelteil 6 versiegelt bzw. verschweißt worden ist und das Deckelteil 6 (erstmalig) wieder von dem Deckelring 4 unter Aufreißen seiner peelfähigen Lage getrennt worden ist, werden die Umfangsvorsprünge 4c, 4d des Deckelrings 6 während des Ultraschallsiegel- bzw. -schweißvorgangs zumindest im Bereich ihrer Spitze teilweise abgeschmolzen (ihre Höhe ist daher im Vergleich mit der Fig. 5 geringer), so dass dort sowie insbesondere zwischen und auch in dem Bereich radial neben den Umfangsvorsprüngen 4c, 4d infolge Wärmeleitung eine gas- und flüssigkeitsdichte Schmelzverbindung erzeugt wird, wobei in den Bereichen radial neben den Umfangsvorsprüngen 4c, 4d und insbesondere zwischen denselben, wo das Deckelteil 6 während des Ultraschallschweißens keinen oder einen nur geringen Druckkontakt mit dem Deckelring 4 aufwies, zwar ebenfalls eine Schmelzverbindung zustande kommt, aber die peelfähige Lage aufgrund deutlich geringerer thermomechanischer Belastung nicht zerstört wird, so dass sie die ihr zugedachte Funktion eines guten Öffnungsverhaltens unbeeinträchtigt erfüllen kann.

Sofern gewünscht, können selbstverständlich auch mehr als zwei Umfangsvorsprünge 4c, 4d an dem Deckelring 4 vorgesehen sein, welche sich nicht notwendigerweise konzentrisch zu dem Deckelring 4 erstrecken müssen. Ferner ist es möglich, anstelle des Deckelrings 4 das Deckelteil 6 mit zwei oder mehreren, entsprechenden Umfangsvorsprüngen zu versehen und die peelfähige Lage im oberen Stirnseitenbereich des Deckelrings 4 vorzusehen (jeweils nicht gezeigt).

Die Fig. 6 zeigt schließlich eine mikroskopische Aufnahme einer erfindungsgemäßen Ultraschallschweiß- bzw. -siegelverbindung, wobei erkennbar ist, dass sich zwischen den - im vorliegenden Fall unter einem Abstand von etwa 0,8 mm angeordneten - Umfangsvorsprüngen 4c, 4d des Deckelrings 4b eine gänzlich von dem während des Ultraschallschweißens plastifizierten, von den beiden Umfangsvorsprüngen 4c, 4d abgeschmolzenen Kunststoffmaterial gebildete Schmelzverbindung 4S eingestellt hat, an welcher die peelfähige Lage (siehe an der dem zweiten Schenkel 4b des Deckelrings zugewandten Unterseite des Deckelteils 6) gleichwohl völlig intakt geblieben ist. Selbst im Bereich der - teilweise abgeschmolzenen - Spitzen beider Umfangsvorsprünge 4c, 4d ist dabei die peelfähige Lage noch partiell intakt geblieben, so dass bei einer dichten Schmelzverbindung, welche sich über den gesamtem Radialabschnitt zwischen den beiden Umfangsvorsprüngen 4b, 4c erstreckt, ein einfaches und sicheres (erstmaliges) Trennen des Deckelteils 6 von dem Deckelring 4 sichergestellt ist, welche auch mangels partiellem Materialabriss eines der Teile 4, 6 und Anhaften an dem anderen 6, 4 für eine hohe Dichtigkeit sorgt, wenn das einmal abgetrennte Deckelteil 6 wieder auf dem Deckelring 4, also rein form- oder reibschlüssig, festgelegt wird.

## Patentansprüche

1. Deckelanordnung (5) für einen Verpackungsbehälter (1), mit einem Deckelring (4) aus einem plastifizierbaren, thermoplastischen Polymermaterial und einem auf den Deckelring (4) aufsetzbaren, formhaltigen Deckelteil (6), wobei
- das Deckelteil (6) an seiner dem Deckelring (4) zugewandten Seite wenigstens eine Lage aus einem peelfähigen Kunststoffmaterial aufweist, wobei die peelfähige Lage wenigstens ein siegelbares, thermoplastisches Polymer enthält und/oder mit einer Decklage aus einem solchen Polymer beschichtet ist, und wobei der Deckelring (4) an seiner dem Deckelteil (6) zugewandten Stirnseite wenigstens einen Umfangsvorsprung (4c, 4d) aufweist, welcher mit der peelfähigen Lage und/oder der Decklage des Deckelteils (6) versiegelt ist; oder
- der Deckelring (4) an seiner dem Deckelteil (6) zugewandten Seite wenigstens eine Lage aus einem peelfähigen Kunststoffmaterial aufweist, wobei die peelfähige Lage wenigstens ein siegelbares, thermoplastisches Polymer enthält und/oder mit einer Decklage aus einem solchen Polymer beschichtet ist, und wobei das Deckelteil (6) an seiner dem Deckelring (4) zugewandten Stirnseite wenigstens einen Umfangsvorsprung aufweist, welcher mit der peelfähigen Lage und/oder der Decklage des Deckelteils (6) versiegelt ist,
**dadurch gekennzeichnet, dass**
- der Deckelring (4) an seiner dem Deckelteil (6) zugewandten Stirnseite wenigstens zwei im Wesentlichen parallel angeordnete Umfangsvorsprünge (4c, 4d) aufweist, welche mit der peelfähigen Lage und/oder der Decklage des Deckelteils (6) versiegelt sind; oder
- das Deckelteil (6) an seiner dem Deckelring (4) zugewandten Stirnseite wenigstens zwei im Wesentlichen parallel angeordnete Umfangsvorsprünge aufweist, welche mit der peelfähigen Lage und/oder der Decklage des Deckelrings (4) versiegelt sind,
wobei der Abstand der Umfangsvorsprünge (4c, 4d) höchstens 3 mm beträgt.

2. Deckelanordnung nach Anspruch 1, **dadurch gekennzeichnet, dass** die wenigstens zwei Umfangsvorsprünge (4c, 4d) des Deckelrings (4) oder des Deckelteils (6) im Wesentlichen konzentrisch angeordnet sind, wobei ihr radialer Abstand höchstens 3 mm beträgt.

3. Deckelanordnung nach Anspruch 1 oder 2, **dadurch gekennzeichnet, dass** der Deckelring (4) oder das Deckelteil (6) an seiner Stirnseite genau zwei Umfangsvorsprünge (4c, 4d) aufweist.

4. Deckelanordnung nach einem der Ansprüche 1 bis 3,
**dadurch gekennzeichnet, dass**
- der Abstand der Umfangsvorsprünge (4c, 4d) zwischen 0,3 mm und 3 mm, insbesondere zwischen 0,5 mm und 2 mm, vorzugsweise zwischen 0,7 mm und 1 mm; und/oder
- die Höhe der Umfangsvorsprünge (4c, 4d) zwischen 0,05 mm und 0,4 mm, insbesondere zwischen 0,1 mm und 0,35 mm, vorzugsweise zwischen 0,15 mm und 0,3 mm,
beträgt.

5. Deckelanordnung nach einem der Ansprüche 1 bis 4,
**dadurch gekennzeichnet, dass** sich der Querschnitt der Umfangsvorsprünge (4c, 4d) zu seinem freien Ende hin verjüngt, wobei er insbesondere spitz nach oben zuläuft.

6. Deckelanordnung nach einem der Ansprüche 1 bis 5,
**dadurch gekennzeichnet, dass** die Umfangsvorsprünge (4c, 4d) einen im Wesentlichen dreieckigen Querschnitt aufweisen.

7. Deckelanordnung nach einem der Ansprüche 1 bis 6,
**dadurch gekennzeichnet, dass** das Deckelteil (6) eine Dicke von insgesamt wenigstens 0,2 mm, insbesondere von insgesamt wenigstens 0,3 mm, vorzugsweise von insgesamt wenigstens 0,4 mm, aufweist.

8. Deckelanordnung nach einem der Ansprüche 1 bis 7,
**dadurch gekennzeichnet, dass** zumindest das Deckelteil (6) wenigstens eine weitere Lage in Form einer im Wesentlichen gas- und flüssigkeitsdichten Barrierelage aufweist.

9. Deckelanordnung nach einem der Ansprüche 1 bis 8,
**dadurch gekennzeichnet, dass** das Deckelteil (6) wenigstens einen in Richtung des Deckelrings (4) vorstehenden Umfangsvorsprung (6a) aufweist, dessen Querschnitt derart an den Querschnitt einer hierzu komplementären Kontaktfläche des Deckelrings (4) angepasst ist, dass das Deckelteil (6) nach erstmaligem Abtrennen von dem Deckelring (4) an dem Deckelring (4) festlegbar ist, wobei es insbesondere an dessen Kontaktfläche im Wesentlichen dichtend anliegt.

10. Verpackungsbehälter (1) mit einer Hülse (2), **dadurch gekennzeichnet, dass** er eine Deckelanordnung (5) nach einem der Ansprüche 1 bis 9 aufweist, deren Deckelring (4) an einem Ende der Hülse (2), insbesondere im Wesentlichen gas- und flüssigkeitsdicht, festgelegt ist.

11. Verpackungsbehälter nach Anspruch 10, **dadurch gekennzeichnet, dass** die Hülse (2) eine im Wesentlichen gas- und flüssigkeitsdichte Innenkaschierung aufweist, wobei die Innenkaschierung der Hülse (2) insbesondere wenigstens eine Lage aus einem siegelfähigen Kunststoffmaterial aufweist, welches mit dem Deckelring (4) der Deckelanordnung (5) versiegelt ist.

12. Verfahren zur Herstellung einer Deckelanordnung (5) nach einem der Ansprüche 1 bis 9, **dadurch gekennzeichnet, dass** das Deckelteil (6) auf den Deckelring (4) aufgesetzt und das Deckelteil (6) mit Ultraschall angeregt wird, wobei die peelfähige Lage und/oder die Decklage des Deckelteils (6) oder des Deckelrings (4) mit den wenigstens zwei Umfangsvorsprüngen (4c, 4d) des Deckelrings (4) oder des Deckelteils (6) unter Bildung einer Schmelzverbindung zwischen den Umfangsvorsprüngen (4c, 4d) ultraschallversiegelt wird.

13. Verfahren nach Anspruch 12, **dadurch gekennzeichnet, dass** das Deckelteil (6) mittels wenigstens einer Sonotrode mit Ultraschall angeregt wird, welche sich zumindest im Wesentlichen um den gesamten Umfang der wenigstens zwei Umfangsvorsprünge (4c, 4d) des Deckelrings (4) oder des Deckelteils erstreckt.

14. Verfahren nach Anspruch 12 oder 13, **dadurch gekennzeichnet, dass** der Deckelring (4) zunächst auf die Hülse (2) eines Verpackungsbehälters (1) aufgesetzt wird und sodann das Deckelteil (6) mit dem Deckelring (4) ultraschallversiegelt wird.

15. Verfahren nach Anspruch 14, **dadurch gekennzeichnet, dass** der Deckelring (4) mit einer Innenkaschierung der Hülse (2), welche wenigstens eine Lage aus einem siegelfähigen Kunststoffmaterial aufweist, versiegelt wird.

## Claims

1. Lid assembly (5) for a packing container (1), with a lid ring (4) of a plasticizable, thermoplastic polymer material and with a dimensionally stable lid part (6), which can be placed on the lid ring (4), wherein
- the lid part (6) has, on its side facing the lid ring (4), at least one layer of a peelable plastic material, wherein the peelable layer contains at least one sealable, thermoplastic polymer and/or is coated with a cover layer of such a polymer, and wherein the lid ring (4) has, on its end face facing the lid part (6), at least one circumferential projection (4c, 4d), which is sealed to the peelable layer and/or to the cover layer of the lid part (6); or
- the lid ring (4) has, on its side facing the lid part (6), at least one layer of a peelable plastic material, wherein the peelable layer contains at least one sealable, thermoplastic polymer and/or is coated with a cover layer of such a polymer, and wherein the lid part (6) has, on its end face facing the lid ring (4), at least one circumferential projection, which is sealed to the peelable layer and/or to the cover layer of the lid part (6),
**characterized in that**
- the lid ring (4) has, on its end face facing the lid part (6), at least two circumferential projections (4c, 4d) arranged essentially parallel, which are sealed to the peelable layer and/or to the cover layer of the lid part (6); or
- the lid part (6) has, on its end face facing the lid ring (4), at least two circumferential projections arranged essentially parallel, which are sealed to the peelable layer and/or to the cover layer of the lid ring (4),
wherein the distance between the circumferential projections (4c, 4d) is at most 3 mm.

2. Lid assembly in accordance with claim 1, **characterized in that** the at least two circumferential projections (4c, 4d) of the lid ring (4) or of the lid part (6) are arranged essentially concentrically, and their radial distance is at most 3 mm.

3. Lid assembly in accordance with claim 1 or 2, **characterized in that** the lid ring (4) or the lid part (6) has exactly two circumferential projections (4c, 4d) on its end face.

4. Lid assembly in accordance with one of the claims 1 through 3, **characterized in that**
- the distance between the circumferential projections (4c, 4d) is between 0.3 mm and 3 mm, especially between 0.5 mm and 2 mm, and preferably between 0.7 mm and 1 mm; and/or
- the circumferential projections (4c, 4d) have a height between 0.05 mm and 0.4 mm, especially between 0.1 mm and 0.35 mm, and preferably between 0.15 mm and 0.3 mm.

5. Lid assembly in accordance with one of the claims 1 through 4, **characterized in that** the cross section of the circumferential projections (4c, 4d) tapers to a point toward the free end of the circumferential projections, wherein it especially tapers upwardly.

6. Lid assembly in accordance with one of the claims 1 through 5, **characterized in that** the circumferential projections (4c, 4d) have an essentially triangular cross section.

7. Lid assembly in accordance with one of the claims 1 through 6, **characterized in that** the lid part (6) has a thickness of at least 0.2 mm in total, especially of at least 0.3 mm in total, and preferably of at least 0.4 mm in total.

8. Lid assembly in accordance with one of the claims 1 through 7, **characterized in that** at least the lid part (6) has at least one additional layer in the form of an essentially gas-tight and liquid-tight barrier layer.

9. Lid assembly in accordance with one of the claims 1 through 8, **characterized in that** the lid part (6) has at least one circumferential projection (6a) which projects in the direction of the lid ring (4) and whose cross section is adapted to the contact surface of the lid ring (4) being complementary to it in such a manner, that the lid part (6) can be fixed to the lid ring (4) after the first-time separation from the lid ring (4), wherein it is especially sealingly in contact with the contact surface thereof.

10. Packing container (1) with a sleeve (2), **characterized in that** it has a lid assembly (5) in accordance with one of the claims 1 through 9, whose lid ring (4) is fixed at one end of the sleeve (2), especially in an essentially gas-tight and liquid-tight manner.

11. Packing container in accordance with claim 10, **characterized in that** the sleeve (2) has an essentially gas-tight and liquid-tight inner lamination, wherein the inner lamination of the sleeve (2) especially has at least one layer of a sealable plastic material which is sealed to the lid ring (4) of the lid assembly (5).

12. Method for manufacturing a lid assembly (5) in accordance with one of the claims 1 through 9, **characterized in that** the lid part (6) is placed on the lid ring (4) and the lid part (6) is energized with ultrasound, wherein the peelable layer and/or the cover layer of the lid part (6) or of the lid ring (4) is sealed ultrasonically to the at least two circumferential projections (4c, 4d) of the lid ring (4) or of the lid part (6) while a fused connection is formed between the circumferential projections (4c, 4d).

13. Method in accordance with claim 12, **characterized in that** the lid part (6) is energized by means of at least one sonotrode, which extends at least essentially around the entire circumference of the at least two circumferential projections (4c, 4d) of the lid ring (4) or of the lid part.

14. Method in accordance with claim 12 or 13, **characterized in that** the lid ring (4) is placed first on the sleeve (2) of a packing container (1) and the lid part (6) is then sealed ultrasonically to the lid ring (4).

15. Method in accordance with claim 14, **characterized in that** the lid ring (4) is sealed to an inner lamination of the sleeve (2) which has at least one layer of a sealable plastic material.

## Revendications

1. Ensemble couvercle (5) pour un récipient d'emballage (1), avec une bague de couvercle (4) fabriquée à partir d'un matériau polymère thermoplastique plastifiable et d'une partie de couvercle (6) de forme stable placée sur la bague de couvercle (4) ;
- la partie de couvercle (6) comportant au niveau de son côté orienté vers la bague de couvercle (4) au moins une couche fabriquée à partir d'une matière plastique pelable, la couche pelable contenant au moins un polymère thermoplastique scellable et/ou étant revêtue d'une couche de recouvrement à partir d'un tel polymère et la bague de couvercle (4) comportant au niveau de son côté avant orienté vers la partie de couvercle (6) au moins une saillie périphérique (4c, 4d) scellée avec la couche pelable et/ou avec la couche de recouvrement de la partie de couvercle (6) ; ou
- la bague de couvercle (4) comporte au niveau de son côté orienté vers la partie de couvercle (6) au moins une couche fabriquée à partir d'une matière plastique pelable, la couche pelable contenant au moins un polymère thermoplastique scellable et/ou étant revêtue d'une couche de recouvrement fabriquée à partir d'un tel polymère et la partie de couvercle (6) comportant au niveau de son côté avant orienté vers la bague de couvercle (4) au moins une saillie périphérique scellée à la couche pelable et/ou à la couche de recouvrement de la partie de couvercle (6) ;
**caractérisé en ce que** :
- la bague de couvercle (4) comporte au niveau de son côté avant orienté vers la partie de couvercle (6) au moins deux saillies périphériques (4c, 4d) disposées pour l'essentiel parallèlement l'une par rapport à l'autre et scellées à la couche pelable et/ou à la couche de recouvrement de la partie de couvercle (6) ; ou
- la partie de couvercle (6) comporte au niveau de son côté avant orienté vers la bague de couvercle (4) au moins deux saillies périphériques disposées pour l'essentiel parallèlement l'une par rapport à l'autre et scellées à la couche pelable et/ou à la couche de recouvrement de la bague de couvercle (4), la distance entre les saillies périphériques (4c, 4d) étant de tout au plus 3 mm.

2. Ensemble couvercle selon la revendication 1, **caractérisé en ce que** les au moins deux saillies périphériques (4c, 4d) de la bague de couvercle (4) ou de la partie de couvercle (6) sont disposées pour l'essentiel concentriquement, leur distance radiale étant de tout au plus 3 mm.

3. Ensemble couvercle selon la revendication 1 ou 2, **caractérisé en ce que** la bague de couvercle (4) ou la partie de couvercle (6) comporte précisément deux saillies périphériques (4c, 4d) au niveau de son côté avant.

4. Ensemble couvercle selon l'une quelconque des revendications 1 à 3, **caractérisé en ce que** :
- la distance entre les saillies périphériques (4c, 4d) est comprise entre 0,3 mm et 3 mm, notamment entre 0,5 mm et 2 mm, de préférence entre 0,7 mm et 1 mm ; et/ou
- la hauteur des saillies périphériques (4c, 4d) est comprise entre 0,05 mm et 0,4 mm, notamment entre 0,1 mm et 0,35 mm, de préférence entre 0,15 mm et 0,3 mm.

5. Ensemble couvercle selon l'une quelconque des revendications 1 à 4, **caractérisé en ce que** la section transversale des saillies périphériques (4c, 4d) se rétrécit en direction de son extrémité libre, celle-ci s'élevant notamment en pointe vers le haut.

6. Ensemble couvercle selon l'une quelconque des revendications 1 à 5, **caractérisé en ce que** les saillies périphériques (4c, 4d) présentent une section transversale pour l'essentiel triangulaire.

7. Ensemble couvercle selon l'une quelconque des revendications 1 à 6, **caractérisé en ce que** la partie de couvercle (6) présente une épaisseur d'au moins 0,2 mm dans l'ensemble, notamment d'au moins 0,3 mm dans l'ensemble, de préférence d'au moins 0,4 mm dans l'ensemble.

8. Ensemble couvercle selon l'une quelconque des revendications 1 à 7, **caractérisé en ce qu'**au moins la partie de couvercle (6) comporte au moins une couche supplémentaire sous la forme d'une couche-écran pour l'essentiel étanche aux gaz et aux fluides.

9. Ensemble couvercle selon l'une quelconque des revendications 1 à 8, **caractérisé en ce que** la partie de couvercle (6) comporte au moins une saillie périphérique (6a) saillant en direction de la bague de couvercle (4) dont la section transversale est adaptée de telle sorte au niveau de sa section transversale à une surface de contact complémentaire de la bague de couvercle (4) que la partie de couvercle (6) peut être fixée à la bague de couvercle (4) après une première séparation de la bague de couvercle (4), ladite partie reposant notamment de façon pour l'essentiel étanche contre sa surface de contact.

10. Récipient d'emballage (1) avec un fourreau (2), **caractérisé en ce qu'**il comporte un ensemble couvercle (5) selon l'une quelconque des revendications 1 à 9 dont la bague de couvercle (4) est fixée au niveau d'une extrémité du fourreau (2), notamment pour l'essentiel de façon étanche aux gaz et aux fluides.

11. Récipient d'emballage selon la revendication 10, **caractérisé en ce que** le fourreau (2) comporte un placage intérieur pour l'essentiel étanche aux gaz et aux fluides, le placage intérieur du fourreau (2) comportant notamment au moins une couche fabriquée à partir d'une matière plastique scellable scellée à la bague de couvercle (4) de l'ensemble couvercle (5).

12. Procédé de fabrication d'un ensemble couvercle (5) selon l'une quelconque des revendications 1 à 9, **caractérisé en ce que** la partie de couvercle (6) est placée sur la bague de couvercle (4) et la partie de couvercle (6) est excitée aux ultrasons, la couche pelable et/ou la couche de recouvrement de la partie de couvercle (6) ou de la bague de couvercle (4) étant scellée aux ultrasons avec les au moins deux saillies périphériques (4c, 4d) de la bague de couvercle (4) ou de la partie de couvercle (6) par formation d'une liaison fondue entre les saillies périphériques (4c, 4d).

13. Procédé selon la revendication 12, **caractérisé en ce que** la partie de couvercle (6) est excitée aux ultrasons à l'aide d'au moins une sonotrode s'étendant au moins pour l'essentiel sur la totalité de la périphérie des au moins deux saillies périphériques (4c, 4d) de la bague de couvercle (4) ou de la partie de couvercle.

14. Procédé selon la revendication 12 ou 13, **caractérisé en ce que** la bague de couvercle (4) est d'abord placée sur le fourreau (2) d'un récipient d'emballage (1) avant de sceller aux ultrasons la partie de couvercle (6) avec la bague de couvercle (4).

15. Procédé selon la revendication 14, **caractérisé en ce que** la bague de couvercle (4) est scellée à un placage intérieur du fourreau (2) comportant au moins une couche fabriquée à partir d'une matière plastique scellable.
